# EUROPEAN PATENT APPLICATION

(11) **EP 4 366 012 A1**
(43) Date of publication of application: **08.05.2024**
(21) Application number: 23206972.4
(22) Date of filing: 31.10.2023
(51) Int. Cl.: H01M 10/04

(54) **WINDING MEMBER AND SECONDARY BATTERY**

(30) Priority: 01.11.2022 KR 20220143616
(71) Applicant: Samsung SDI Co., Ltd., Yongin-si, Gyeonggi-do 17084 (KR)
(72) Inventor: Kim, Kyoung Tae, 17084 Yongin-si, Gyeonggi-do (KR); Park, Yeon Jin, 17084 Yongin-si, Gyeonggi-do (KR); Park, June Hyoung, 17084 Yongin-si, Gyeonggi-do (KR); Kim, Joung Ku, 17084 Yongin-si, Gyeonggi-do (KR); Lee, Dong Sub, 17084 Yongin-si, Gyeonggi-do (KR); Kang, Bong Geun, 17084 Yongin-si, Gyeonggi-do (KR)
(74) Representative: Gulde & Partner

(57) **Abstract**

A winding member including a winding core for an electrode assembly, winding a positive electrode plate, a negative electrode plate, and a first separator, the winding core including a pair of clamps (112a, 112b) spaced apart from each other vertically around an insertion groove (113), the first clamp (112a) including a pair of protrusions (ax, ay) protruding in the direction of the second clamp (112b) on an inner surface of the first clamp, and at least one of the pair of protrusions fixing a winding-front end of the first separator inserted into the insertion groove to an inner surface of the second clamp.

## Description

### BACKGROUND

### 1. Field

A winding member and a secondary battery are disclosed.

### 2. Description of the Related Art

A secondary battery is disclosed.

### SUMMARY

The present invention is set out in the appended set of claims, wherein the drawings and respective description relate to advantageous embodiments thereof. In a first aspect the present invention is directed to a winding member, including a winding core for an electrode assembly, winding a positive electrode plate, a negative electrode plate, and a first separator, the winding core including a pair of clamps extending along a longitudinal direction of the winding core a base portion coupled to a first and second end of each of the clamps the clamps being spaced apart from each other vertically around an insertion groove, the clamps including a first clamp and a second clamp extending along the longitudinal direction the first clamp including a pair of protrusions protruding in the direction of the second clamp on an inner surface of the first clamp, and at least one of the pair of protrusions fixing a winding-front end of the first separator inserted into the insertion groove to an inner surface of the second clamp.

The winding member may include the pair of protrusions being spaced apart from each other in the longitudinal direction on the inner surface of the first clamp, and the winding-front end of the first separator in which both of the pair of protrusions are inserted into the insertion groove being fixed to the inner surface of the second clamp.

The winding member may include, in the pair of protrusions, peripheral regions being concave compared to the protrusions.

The winding member may include both edges of the pair of protrusions being rounded in the longitudinal direction.

The winding member may include the pair of protrusions including a first protrusion adjacent to the first end of the first clamp, and a second protrusion adjacent to the second end of the first clamp.

The winding member may have a separation distance between the first protrusion and the second protrusion in the longitudinal direction being 1% to 50% of a length of the clamp in the longitudinal direction.

The winding member may include the first protrusion being located at 20% to 52% of a length of the clamp in the longitudinal direction.

The winding member may include the second protrusion being located at 58% to 90% of a length of the clamp unit in the longitudinal direction.

The winding member may include a length of the first protrusion and a length of the second protrusion in the longitudinal direction being 2 mm to 5 mm, and both a height of the first protrusion and a height of the second protrusion being equal to a height of the insertion groove minus the first separator and a second separator.

The winding member may include a height of the first clamp at the first end of the first clamp being equal to a height of the second clamp, and a height ratio of the first clamp and the second clamp at the second end of the first clamp being 10:0 to 6:4.

The winding member may include the inner surface of the first clamp and the inner surface of the second clamp being flat planes parallel to each other and being inclined with respect to a center line in the longitudinal direction.

The winding member may include when the first clamp and the second clamp are cut perpendicular to the longitudinal direction, outer surfaces thereof being shaped of a circle divided by the insertion groove.

The winding member may include the inner and outer surfaces of the first clamp being connected in a rounded manner, a radius of curvature of a left round part of the first clamp being greater than a radius of curvature of a right round part of the first clamp, the inner and outer surfaces of the second clamp being connected in a round manner, and a radius of curvature of a left round part of the second clamp being smaller than a radius of curvature of a right round part of the second clamp.

A second aspect of the present invention is directed to a secondary battery, including an electrode assembly wound through a winding member, the winding member including a winding core for an electrode assembly, winding a positive electrode plate, a negative electrode plate, and a first separator, the winding core including a pair of clamps extending along a longitudinal direction of the winding core a base portion coupled to a first end and a second end of each of the clamps the clamps being spaced apart from each other vertically around an insertion groove, the clamps including a first clamp and a second clamp extending along the longitudinal direction the first clamp including a pair of protrusions protruding in the direction of the second clamp on an inner surface of the first clamp, and at least one of the pair of protrusions fixing a winding-front end of the first separator inserted into the insertion groove to an inner surface of the second clamp.

The secondary battery may include the pair of protrusions being spaced apart from each other in the longitudinal direction on the inner surface of the first clamp, and the winding-front end of the first separator in which both of the pair of protrusions are inserted into the insertion groove being fixed to the inner surface of the second clamp.

The secondary battery may include, in the pair of protrusions, peripheral regions being concave compared to the protrusions.

The secondary battery may include both edges of the pair of protrusions being rounded in the longitudinal direction.

The secondary battery may include the pair of protrusions including a first protrusion adjacent to the first end of the first clamp, and a second protrusion adjacent to the second end of the first clamp.

The secondary battery may include a separation distance between the first protrusion and the second protrusion in the longitudinal direction being 1% to 50% of a length of the clamp in the longitudinal direction.

A third aspect of the present invention is directed to a winding member, including a winding core for an electrode assembly, winding a positive electrode plate and a negative electrode plate, the winding core including a pair of clamps extending along a longitudinal direction of the winding core a base portion coupled to a first end and a second end of each of the clamps the clamps being spaced apart from each other vertically around an insertion groove, the clamps including a first clamp and a second clamp extending along the longitudinal direction the first clamp including a pair of protrusions protruding in the direction of the second clamp on an inner surface of the first clamp, and at least one of the pair of protrusions fixing a winding-front end to an inner surface of the second clamp.

### BRIEF DESCRIPTION OF DRAWINGS

Features will become apparent to those of skill in the art by describing in detail exemplary embodiments with reference to the attached drawings in which:
FIG. 1 is a schematic diagram showing manufacturing equipment in which a winding member for an electrode assembly is installed.
FIG. 2A is a perspective view showing a winding member for an electrode assembly.
FIG. 2B is a perspective view showing a winding core in the winding member of FIG. 2A.
FIG. 3 is a longitudinal cross-sectional view showing a winding member taken along line 3-3' of FIG. 2B.
FIGS. 4A and 4B side views showing the winding member of FIG. 2.
FIG. 5 is an enlarged view showing portion 5 of FIG. 3.
FIGS. 6A and 6B are cross-sectional views taken along lines 6a-6a' and 6b-6b' of FIG. 3, respectively.
FIGS. 7A and 7B show images of the center of the electrode assembly wound according to example embodiments.
FIG. 8 is a longitudinal cross-sectional view showing an example embodiment of a winding member taken along line 3-3' of FIG. 2B.
FIGS. 9A and 9B are side views showing the winding member of FIG. 8.
FIGS. 10A and 10B are cross-sectional views taken along lines 10a-10a' and 10b-10b' of FIG. 8, respectively.
FIGS. 11A and 11B are a perspective view and a cross-sectional view respectively showing a secondary battery including an electrode assembly wound by a winding member.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a winding core for an electrode assembly according to various embodiments of the present disclosure will be described in detail with reference to the accompanying drawings. First, manufacturing equipment in which the electrode assembly winding member 100 is installed will be briefly described.

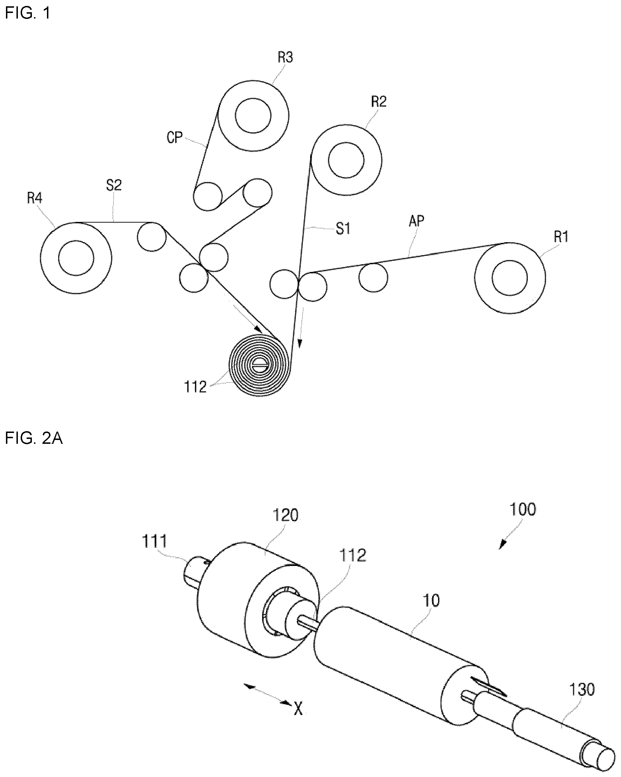

FIG. 1 is a schematic diagram showing manufacturing equipment in which a winding member for an electrode assembly is installed. Referring to FIG. 1, the manufacturing equipment includes a winding member 100 for an electrode assembly, including a roll R1 around which a positive electrode plate AP is wound, a roll R2 around which a first separator S1 is wound, a roll R3 around which a negative electrode plate CP is wound, and a roll R4 around which a second separator S2 is wound. Accordingly, the positive electrode plate AP, the first separator S1, the negative electrode plate CP, and the second separator S2, may be taken out from the respective rolls R1, R2, R3, and R4 and stacked in order, and may be wound together by the winding member 100 for the electrode assembly 10 in the form of a so-called jelly roll. The manufacturing equipment may further include a plurality of transfer rollers for guiding the transfer of the positive electrode plate AP, the negative electrode plate CP, and the first and second separators S1 and S2 unwound from the respective rolls R1, R2, R3, and R4.

The electrode assembly 10 may be wound in a jelly-roll type in a state in which the positive electrode plate AP, the first separator S1, the negative electrode plate CP, and the second separator S2, each composed of one sheet of strip, are sequentially stacked. In addition, a fixing tape may be attached to the outermost layer surface of the wound electrode assembly 10 to fix the wound electrode assembly in a jelly-roll shape so as not to be unwound.

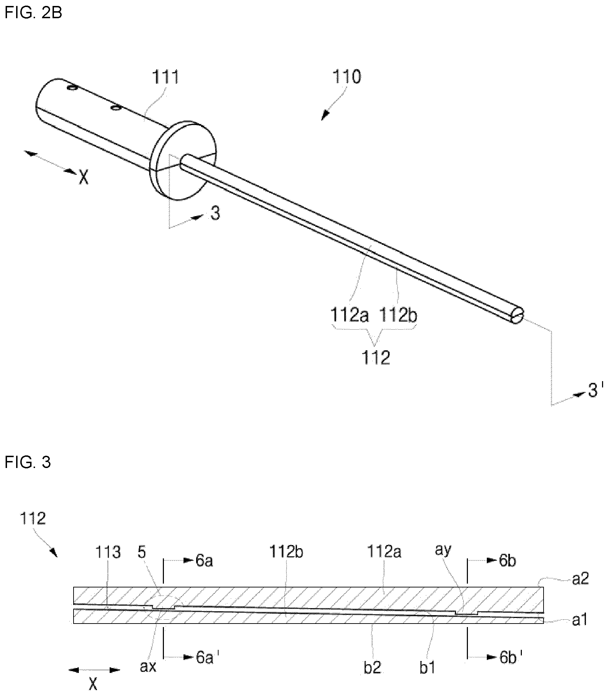

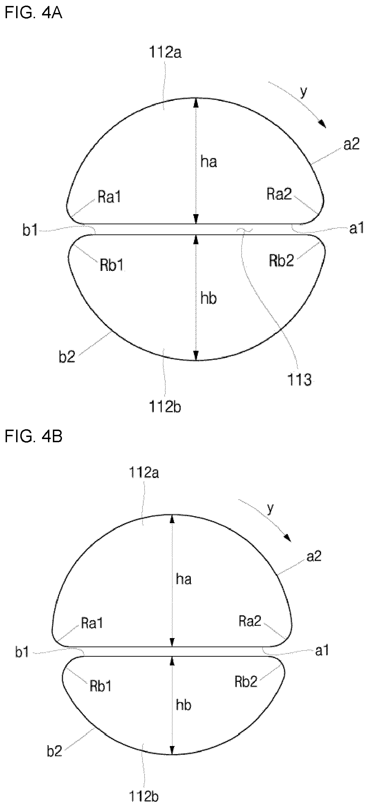

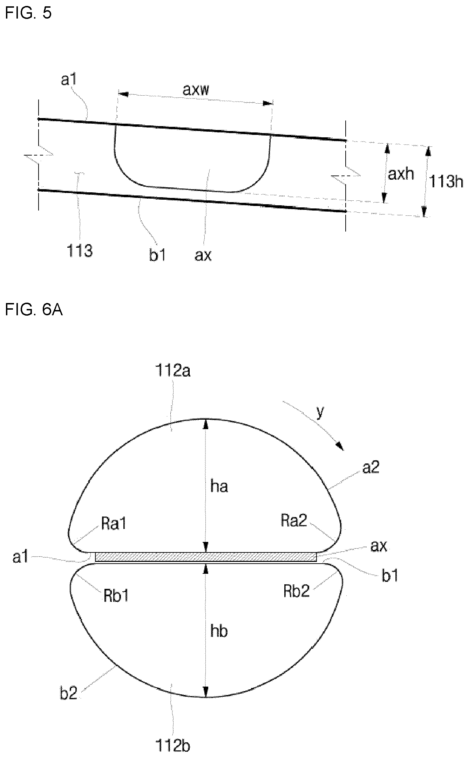

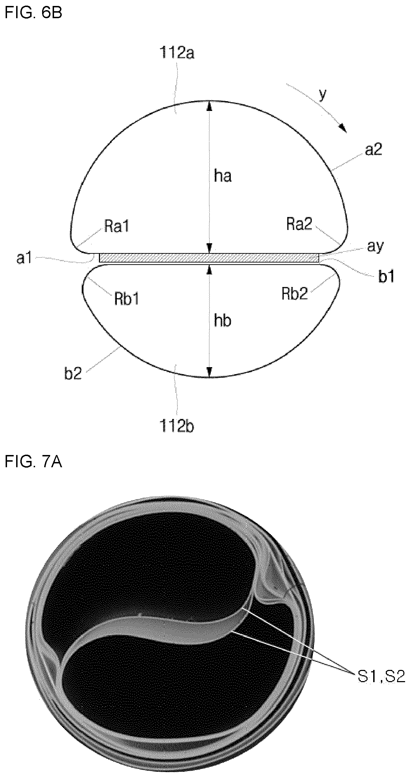

Hereinafter, the winding member 100 will be described in detail. FIG. 2A is a perspective view showing a winding member for an electrode assembly. FIG. 2B is a perspective view showing a winding core in the winding member of FIG. 2A. FIG. 3 is a longitudinal cross-sectional view showing a winding member taken along line 3-3' of FIG. 2B. FIGS. 4A and 4B 4A and 4B side views showing the winding member of FIG. 2. FIG. 5 is an enlarged view showing portion 5 of FIG. 3. FIGS. 6A and 6B are cross-sectional views taken along lines 6a-6a' and 6b-6b' of FIG. 3, respectively.

First, the winding member 100 may include a winding core 110, a winding core guide 120 mounted on one end of the winding core 110, and a winding core holder 130 mounted on the other end of the winding core 110. The winding core 110 may include a base portion 111 and a clamp 112 extending from the base portion 111 along a winding axis direction. The base portion 111 may include a fastening hole for mounting in the manufacturing equipment. The winding core 110 may be fixed to the rotating part of the manufacturing equipment by the base portion 111 and may rotate to wind the positive electrode plate AP, the negative electrode plate CP, and the separators S1 and S2 that are unwound from the respective rolls R1, R2, R3, and R4, on the clamp 112, in a predetermined order. Here, the winding core guide 120 and the winding core holder 130 may guide the traveling directions of the respective electrode plates and separators of the electrode assembly 10 wound around the winding core 110 so that the winding of the electrode assembly is stabilized.

One end of the clamp 112 may be fixed to the base portion 111 and includes a first clamp 112a and a second clamp 112b. The first clamp 112a and the second clamp 112b are spaced apart from each other around the insertion groove 113.

The front end of the electrode assembly 10 may be inserted and fixed into the insertion groove 113 between the first and second clamps 112a and 112b. Here, the front end of electrode assembly 10 may mean only the front end of each of the separators S1 and S2. Thus, the front end of each of the separators S1 and S2 may be inserted and fixed into the insertion groove 113 between the first and second clamps 112a and 112b. When only the first separator S1 and the second separator S2 are inserted into the insertion groove 113, the separators S1 and S2 may be first wound by predetermined turns, and the positive electrode plate AP and the negative electrode plate CP may then be wound together. In this case, since only the separators S1 and S2 are located inside the electrode assembly 10, damages to the positive electrode plate AP and the negative electrode plate CP and internal short circuit of the electrode assembly 10 can be more effectively prevented.

An inner surface a1 of the first clamp 112a and an inner surface b1 of the second clamp 112b, which may be spaced apart from each other, may be flat planes. In addition, the first clamp 112a may include protrusions ax and ay protruding from the inner surface a1 toward the inner surface b1 of the second clamp 112b. The pair of protrusions ax and ay may be spaced apart from each other along the longitudinal direction x of the first clamp 112a. A separation distance between the protrusions ax and ay may be smaller than the length of the electrode assembly 10 in the longitudinal direction x for winding.

In addition, the protrusions ax and ay may include a first protrusion ax adjacent to one end of the first clamp 112a and a second protrusion ay adjacent to the other end of the first clamp 112a. The first protrusion ax may be located at 20% to 52%, preferably 25% to 50% of the length of the first clamp 112a in the longitudinal direction (x). In addition, the second protrusion ay may be located at 58% to 90%, preferably 60% to 85% of the length of the first clamp 112a in the longitudinal direction (x). Here, 0% of the length of the first clamp 112a in the longitudinal direction (x) may be one end, and 100% may be the other end. In addition, the positions of the first protrusion ax and the second protrusion ay may be at the respective centers in the longitudinal direction x. In an implementation, the first protrusion ax may be located at 25% to 50% of the length of the first clamp 112a in the longitudinal direction x, and the second protrusion ay may be located at 60% to 85% of the length of the first clamp 112a in the longitudinal direction x.

In addition, the separation distance between the first protrusion ax and the second protrusion ay may be 1% to 50% relative to the length of the first clamp 112a in the longitudinal direction x. Here, the separation distance may be the distance between first protrusion ax and second protrusion ay facing each other. In an implementation, the separation distance between the first protrusion ax and the second protrusion ay may be 5% to 30% relative to the length of the first clamp 112a in the longitudinal direction x. The protrusions ax and ay may be located on the inner surface a1 of the first clamp 112a, and the lengths axw thereof in the longitudinal direction x may be 2 mm to 5 mm, preferably 2.5 mm to 4.5 mm (see, e.g., FIG. 5). Here, when the lengths axw of the protrusions ax and ay in the longitudinal direction x are less than 2 mm, damages may occur when fixing the separators S1 and S2, and when the lengths axw are greater than 5 mm, only the overall size of the clamp 112 may be increased. In addition, the heights axh of the protrusions ax and ay may be the same as the height 113h of the insertion groove 113 minus two separators. In a preferred embodiment, the protrusions ax and ay may be located on the inner surface a1 of the first clamp 112a, and the lengths axw thereof in the longitudinal direction x may be 2 mm to 5 mm and the heights axh of the protrusions ax and ay may be the same as the height 113h of the insertion groove 113 minus two separators. For example, when the height 113h of the insertion groove 113 is 0.1 mm and the thickness of each of the separators S1 and S2 is 15 µm, the heights of the protrusions ax and ay may be 0.07 mm.

As an example, the clamp 112 may be easily fixed to the inner surface b2 of the second clamp 112b by protrusion (ax, ay) of the front ends of the first separator S1 and the second separator S2 inserted into the insertion groove 113. Here, at least one protrusion (ax, ay) can fix the front end of separators S1 and S2. Of course, both protrusions (ax, ay) can fix the front end of separators S1 and S2. For example, when the separation distance between the protrusions ax and ay is equal to or greater than the length of the electrode assembly 10 in the longitudinal direction x, at least one of the protrusions ax and ay may fix the front ends of the separators S1 and S2. In addition, when the separation distance between the protrusions ax and ay is less than the length of the electrode assembly 10 in the longitudinal direction x, at least one of the protrusions ax and ay may fix the front ends of the separators S1 and S2, or both the protrusions ax and ay may fix the front ends of the separators S1 and S2.

The clamp 112 may have a substantially circular cross section and may have a cylindrical shape divided into an upper first clamp 112a and a lower second clamp 112b through the insertion groove 113 extending in the longitudinal direction x. That is, when the first clamp 112a and the second clamp 112b are cut perpendicular to the longitudinal direction x, the outer surfaces a2 and b2 may be substantially circular. In addition, the inner surface a1 and the outer surface a2 of the first clamp 112a may be connected in a round manner, and the inner surface b1 and the outer surface b2 of the second clamp 112b may be connected in a round manner. According to a preferred embodiment, the clamp 112 may have a substantially circular cross section and may have a cylindrical shape divided into an upper first clamp 112a and a lower second clamp 112b through the insertion groove 113 extending in the longitudinal direction x and the inner surface a1 and the outer surface a2 of the first clamp 112a may be connected in a round manner, and the inner surface b1 and the outer surface b2 of the second clamp 112b may be connected in a round manner.

The first clamp 112a may further include a left round part Ra1 and a right round part Ra2 connecting the inner surface a1 and the outer surface a2. Here, the left and right may refer to the left and right sides when the clamp 112 is viewed from one side, and when viewed from the other side, the left and right sides may be flipped. The radius of curvature of one side being in contact with the positive electrode plate AP, the negative electrode plate CP, and the separators S1 and S2 may be larger than the other side of the left round part Ra1 and the right round part Ra2. In addition, the second clamp 112b may further include a left round part Rb1 and a right round part Rb2 connecting the inner surface b1 and the outer surface b2. Here, the left and right refer to the left and right sides when the clamp 112 is viewed from the other side, and may be the opposite when viewed from one side.

As an example, when the clamp 112 rotates in the winding direction (y) clockwise to wind the electrode assembly 10, the left round part Ra1 of the first clamp 112a may have a larger radius of curvature than the right round part Ra2 thereof, and the left round part Rb1 of the second clamp 112b may have a smaller curvature radius than the right round part Rb2 thereof. As an example, the left round part Ra1 of the first clamp 112a and the right round part Rb2 of the second clamp 112b have a radius of curvature of 3 mm, and the right round part Ra2 of the first clamp 112a and the left round part Rb1 of the second clamp 112b have a radius of curvature of 2 mm. Here, the clockwise direction may refer to a direction when viewed from the other end of the clamp 112.

In addition, the protrusions ax and ay may be located on the inner surface (a1) of the first clamp 112a, and may be spaced apart from the left round part (Ra1) and the right round part (Ra2). In addition, each of the protrusions ax and ay may have the inner surface a1 located on both sides in the longitudinal direction x, and the peripheral regions of the protrusions ax and ay may be concave relative to the protrusions ax and ay. The protrusions ax and ay may both have rounded edges in the longitudinal direction (x). The protrusions ax and ay may prevent damage to the electrode assembly 10 when separated from the winding core 110 after the electrode assembly 10 is wound.

In the clamp 112, the insertion groove 113 may be located approximately in the center (diameter) at one end connected to the base portion 111, and the insertion groove 113 may be biased toward the second clamp 112b at the other end opposite to the one end. That is, at one end, a first height ha of the first clamp 112a and a second height hb of the second clamp 112b may be the same, and at the other end, the first height ha of the first clamp 112a may be greater than the second height h2 of the second clamp 112b. Here, at the other end of the clamp 112, the ratio of the first height ha of the first clamp 112a to the second height h2 of the second clamp 112b may be 10:0 to 6:4, preferably 9:1 to 7:3. Of course, at one end of the clamp 112, the ratio of the first height ha of the first clamp 112a to the second height h2 of the second clamp 112b may be 5:5.

Here, the first height h1 may be a distance ranging perpendicular to the outer surface of the first clamp 112a from the inner surface a1, and the second height h2 may be a distance ranging perpendicular to the outer surface of the second clamp 112b from the inner surface b1. That is, the inner surface a1 of the first clamp 112a and the inner surface b1 of the second clamp 112b may be inclined from the center line in the longitudinal direction x. In addition, the inner surface a1 of the first clamp 112a and the inner surface b1 of the second clamp 112b may be parallel to each other in the longitudinal direction x.

The first clamp 112a and the second clamp 112b may be movable along the longitudinal direction x. Here, the first clamp 112a and the second clamp 112b may be respectively connected to the first base portion 111a and the second base portion 111b cut into upper and lower parts. That is, after winding of the electrode assembly 10 is completed, the second clamp 112b may move in one direction where the base portion 111 is located to separate from the electrode assembly 10, and then the first clamp 112a may also move in one direction to separate the electrode assembly 10 from the winding core 110.

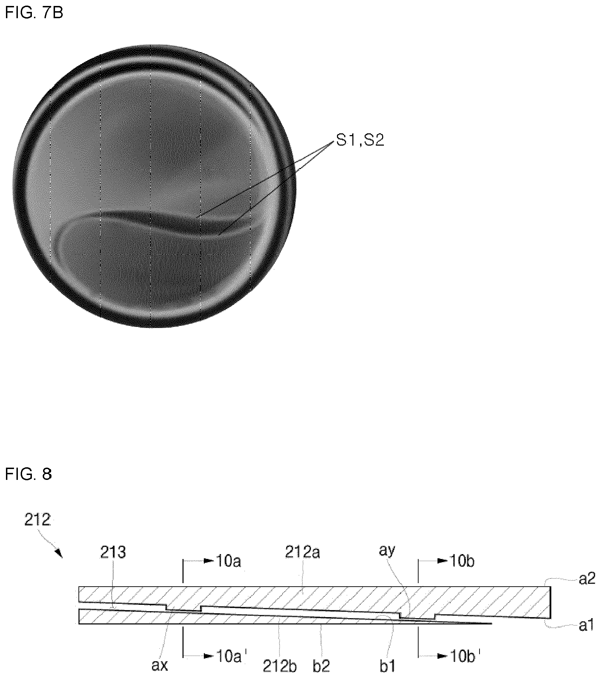

FIGS. 7A and 7B show images of the center of the electrode assembly wound according to example embodiments. As shown in FIG. 7A, both sides of the electrode assembly 10 may be asymmetric on the basis of the separators S1 and S2 being located in the center of the electrode assembly 10 wound by the present disclosure. On the basis of the separators S1 and S2, both sides of the electrode assembly 10 may be asymmetric at a ratio of 0:10 to 4:6, preferably 1:9 to 3:7. The asymmetric ratio of the center of the electrode assembly 10 may correspond to the asymmetric ratio of the first height ha and the second height h2 at the other ends of the first clamp 112a and the second clamp 112b of the winding core 110.

As a comparative example, the electrode assembly shown in FIG. 7B may be wound by the first clamp and the second clamp having the same shape and size, and it can be seen that both sides are symmetrical on the basis of the separators S1 and S2 in the center.

Since both sides of the center of the electrode assembly 10 wound by the winding member 100 of the present disclosure are asymmetric on the basis of the separators S1 and S2, a welding rod can be inserted through a wider space, thereby making a separate reforming process unnecessary (e.g., a process for pressing the separators S1 and S2 in the center toward one side).

In addition, in the winding member 100, the protrusions ax and ay provided in the winding core 110, on the front ends of the separators S1 and S2 can be easily fixed, thereby facilitating winding of the front end of the electrode assembly 10. In addition, the protrusions ax and ay of the winding member 100 may have both sides rounded in the longitudinal direction x, thereby preventing the electrode assembly 10 from being damaged when being separated after winding is completed.

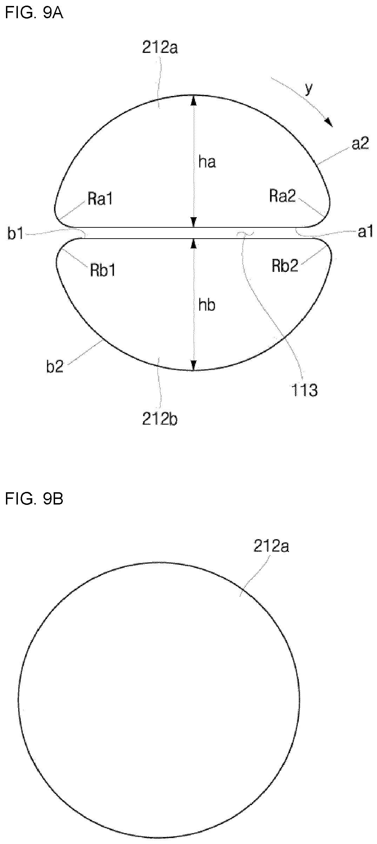

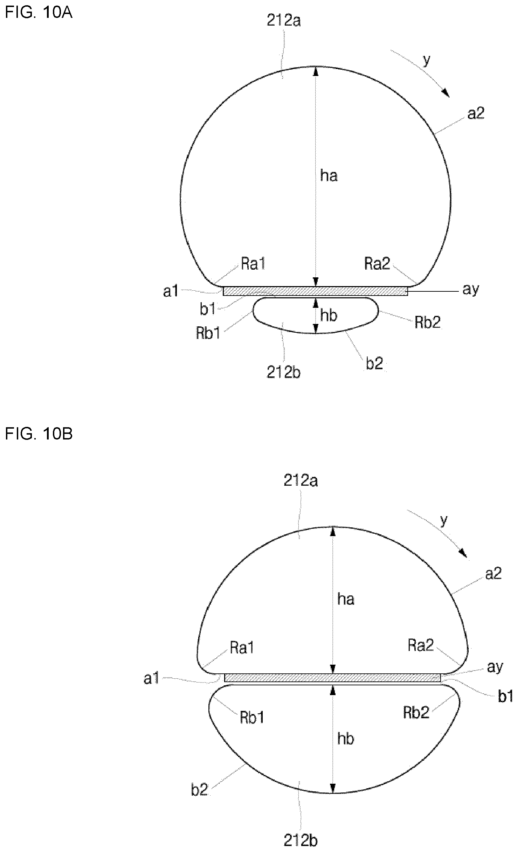

FIG. 8 is a longitudinal cross-sectional view showing an example embodiment of a winding member taken along line 3-3' of FIG. 2B. FIGS. 9A and 9B are side views showing the winding member of FIG. 8. FIGS. 10A and 10B are cross-sectional views taken along lines 10a-10a' and 10b-10b' of FIG. 8, respectively.

Hereinafter, another example of the winding member of the present disclosure will be described with reference to FIGS. 8, 9A, 9B, 10A, and 10B. The configuration of the winding member may be similar to that of the winding member 100 shown in FIGS. 2A and 2B, except for the configuration of a clamp 212.

In the clamp 212, the height of the first clamp 212a and the height of the second clamp 212b may be the same at one end, and only the first clamp 212a may be positioned at the other end. That is, the length of the first clamp 212a in the longitudinal direction x may be greater than that of the second clamp 212b. This is because the ratio of the first height ha of the first clamp 212a to the second height hb of the second clamp 212b at the other end of the clamp 212 may be 10:0. Of course, at one end of the clamp 212, the ratio of the first height ha of the first clamp 212a to the second height hb of the second clamp 212b may be 5:5. That is, the inner surface a1 of the first clamp 212a and the inner surface b1 of the second clamp 212b may be flat planes and may be inclined to have a certain angle with respect to the center line in the longitudinal direction x. Of course, the inner surface a1 of the first clamp 212a and the inner surface b1 of the second clamp 212b may be parallel to each other in the longitudinal direction x.

Here, the length of the second clamp 212b in the longitudinal direction x may be greater than an area where the second protrusion ay of the first clamp 212a is located and may be smaller than the length of the first clamp 212a. In addition, in an area where the first protrusion ax is located, the ratio of the first height ha of the first clamp 212a to the second height hb of the second clamp 212b may be 3:1 to 1.5:1. In addition, in the area where the second protrusion ay is located, the ratio of the first height ha of the first clamp 212a to the second height hb of the second clamp 212b may be 6:1 to 4:1. These ratios may vary depending on the locations of the protrusions ax and ay.

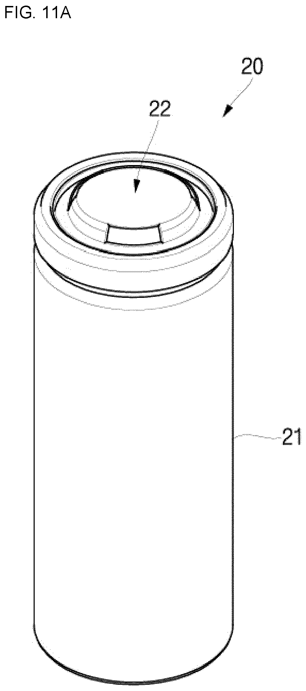

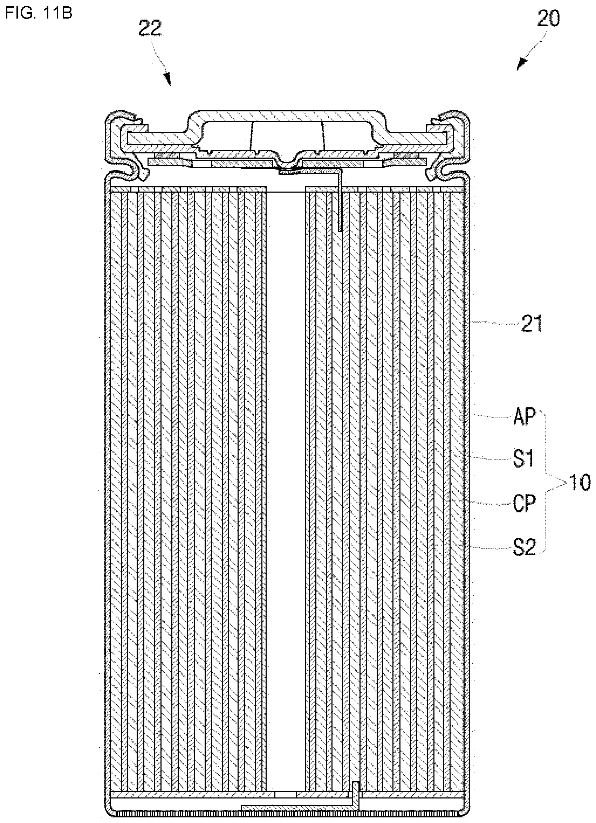

FIGS. 11A and 11B are a perspective view and a cross-sectional view respectively showing a secondary battery including an electrode assembly wound by a winding member. In a secondary battery 20, after the jelly-roll type electrode assembly 10 wound in a cylindrical case 21 having an upper opening is inserted, a cap assembly 22 may seal the upper opening of the cylindrical case 21. Of course, in the secondary battery 20, the positive electrode plate AP may be electrically connected to the cap assembly 22, and the negative electrode plate CP may be electrically connected to the cylindrical case 21.

The electrode assembly 10 may be wound so that the positive electrode plate AP, the first separator S1, the negative electrode plate CP, and the second separator S2, each composed of one sheet of strip, are sequentially stacked.

The positive electrode plate AP may be formed by coating a positive electrode active material layer such as a transition metal oxide on at least one surface of a positive electrode current collector made of a metal foil such as aluminum or an aluminum alloy. In addition, the positive electrode plate AP may include a positive electrode tab (or a positive electrode uncoated portion), which may be a region of the positive electrode current collector on which the positive electrode active material layer is not coated. In some examples, the positive electrode tab may be formed by cutting in advance to protrude to the other side when manufacturing the positive electrode plate AP, and may protrude more to one side than other components of the electrode assembly without a separate cutting operation.

The negative electrode plate CP may be formed by coating a negative electrode active material layer such as graphite or carbon on at least one surface of a negative electrode current collector made of a metal foil such as copper, a copper alloy, nickel, or a nickel alloy. In addition, the negative electrode plate CP may include a negative electrode tab (or a negative electrode uncoated portion), which is a region of the negative electrode current collector on which the negative electrode active material layer is not coated. In some examples, the negative electrode tab may be formed by cutting in advance to protrude to the other side when manufacturing the negative electrode plate CP, and may protrude more to the other side than other components of the electrode assembly without a separate cutting operation.

The first and second separators S1 and S2 may be positioned between the positive electrode plate AP and the negative electrode plate CP to prevent a short circuit and enable the movement of lithium ions, and may include polyethylene, polypropylene, or a composite film of polyethylene and polypropylene. In addition, the first and second separators S1 and S2 may be replaced with an inorganic solid electrolyte such as a sulfide, oxide, or a phosphate compound that does not require a liquid or gel electrolyte. The pair of protrusions ax, ay may be spaced apart from each other in the longitudinal direction (x) on the inner surface a1 of the first clamp 212a, and the winding-front end of the first separator S1 in which both protrusions of the pair of protrusions ax, ay are inserted into the insertion groove 113 may be fixed to the inner surface b1 of the second clamp 212b. In the pair of protrusions ax and ay, peripheral regions may be concave compared to the pair of protrusions ax and ay. Both edges of the pair of protrusions ax and ay in the longitudinal direction x may be rounded. The pair of protrusions ax and ay may include a first protrusion ax adjacent to the first end of the first clamp 212a and a second protrusion ay adjacent to the second end of the first clamp 212a.

The separation distance between the first protrusion ax and the second protrusion ay in the longitudinal direction x may be 1% to 50% of a length of the clamp 112, 212 in the longitudinal direction x.

As described above, in the winding member according to various embodiments of the present disclosure and the secondary battery including the electrode assembly manufactured thereby, since both sides of the center of an electrode assembly wound by a winding member are asymmetric on the basis of a separator, a welding rod can be inserted through a wider space, thereby making a separate reforming process for pressing the separator in the center toward one side unnecessary.

In addition, in the winding member according to various embodiments of the present disclosure and the secondary battery including the electrode assembly manufactured thereby, the winding member can easily fix a front end of a separator by means of a protrusion provided at a winding core, and the protrusion is provided to have both sides rounded in the longitudinal direction, and thus can prevent the electrode assembly from being damaged when being separated after winding is completed.

By way of summation and review, a secondary battery may be constructed such that an electrode assembly is formed by winding or stacking a positive electrode, a negative electrode, and a separator interposed between the positive electrode and the negative electrode and sealed in a can or a pouch together with an electrolyte.

In the case of a winding-type electrode assembly, an electrode assembly may be completed by winding the electrode plate around a winding core serving as a winding center and then separating the winding core. Since the winding core needs to be separated from the electrode assembly after completion of winding, and the electrode assembly should not be damaged during separation, the lower the surface friction, the better. Therefore, it is necessary to provide a winding core capable of smoothly separating and discharging the electrode assembly.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

List of reference signs
- 10: Electrode assembly
- 20: Secondary battery
- 21: Cylindrical case

- 22: Cap assembly

- 100: Winding member
- 110: Winding core
- 111: Base portion
- 111a: First base portion
- 111b: Second base portion
- 112, 212: Clamp
- 112a: First clamp
- 112b: Second clamp
- 113: Insertion groove
- 113h: Height
- 120: Winding core guide
- 130: Winding core holder
- 212a: First clamp
- 212b: Second clamp
- R1 to R4: Rolls
- S1, S2: First and second separators
- AP: Positive electrode plate
- CP: Negative electrode plate
- ax, ay: Protrusions
- a1, b1: Inner surface
- a2, b2: Outer surface
- Ra1, Ra2: Left and right round part of the first clamp
- Rb1, Rb2: Left and right round part of the second clamp
- ha: First height of the first clamp
- hb: Second height of the second clamp
- x: Longitudinal direction
- axw: Length of the protrusions ax, ay
- axh: Heights axh of the protrusions ax, ay

## Claims

1. A winding member (100), comprising a winding core (110) for an electrode assembly (10), the winding core (110) being configured to wind a positive electrode plate (AP), a negative electrode plate (CP), and a first separator (S1),
wherein:
the winding core (110) includes:
a pair of clamps (112, 212) extending along a longitudinal direction (x) of the winding core (110), and
a base portion (111) coupled to a first and second end of each of the clamps (112, 212);
the pair of clamps (112, 212) are spaced apart from each other vertically around an insertion groove (113), the pair of clamps (112, 212) including a first clamp (212a) and a second clamp (212b) extending along the longitudinal direction (x);
the first clamp (212a) includes a pair of protrusions protruding in the direction of the second clamp (212b) on an inner surface (a1) of the first clamp (212a); and
at least one protrusion of the pair of protrusions (ax, ay) fixes a winding-front end of the first separator (S1) inserted into the insertion groove (113) to an inner surface (b1) of the second clamp (212b).

2. The winding member (100) as claimed in claim 1, wherein:
the pair of protrusions (ax, ay) are spaced apart from each other in the longitudinal direction (x) on the inner surface (a1) of the first clamp (212a), and
the winding-front end of the first separator (S1), in which both protrusions of the pair of protrusions (ax, ay) are inserted into the insertion groove (113), is fixed to the inner surface (b1) of the second clamp (212b).

3. The winding member (100) as claimed in claim 1 or 2, wherein in the pair of protrusions (ax, ay), peripheral regions are concave compared to the protrusions (ax, ay).

4. The winding member (100) as claimed in any of claims 1 to 3, wherein both edges of the pair of protrusions (ax, ay) in the longitudinal direction (x) are rounded.

5. The winding member (100) as claimed in any of claims 1 to 4, wherein the pair of protrusions (ax, ay) include:
a first protrusion (ax) adjacent to the first end of the first clamp (212a); and
a second protrusion (ay) adjacent to the second end of the first clamp (212a).

6. The winding member (100) as claimed in claim 5, wherein a separation distance between the first protrusion (ax) and the second protrusion (ay) in the longitudinal direction (x) is 1% to 50% of a length of the clamp (112, 212) in the longitudinal direction (x).

7. The winding member (100) as claimed in claim 5, wherein the first protrusion (ax) is located at 20% to 52% of a length of the clamp (112, 212) in the longitudinal direction (x).

8. The winding member (100) as claimed in claim 5, wherein the second protrusion (ay) is located at 58% to 90% of a length of the clamp (112, 212) unit in the longitudinal direction (x).

9. The winding member (100) as claimed in claim 5, wherein:
a length (axw) of the first protrusion (ax) and a length (axw)of the second protrusion (ay) in the longitudinal direction (x) are each 2 mm to 5 mm, and
both a height (axh) of the first protrusion and a height (axh) of the second protrusion are equal to a height (113h) of the insertion groove (113) minus the first separator (S1) and a second separator (S2).

10. The winding member (100) as claimed in any of claims 1 to 9, wherein:
a height (ha) of the first clamp (212a) at the first end of the first clamp (212a) is equal to a height (hb) of the second clamp (212b), and
a height ratio of the first clamp (212a) and the second clamp (212b) at the second end of the first clamp (212a) is 10:0 to 6:4.

11. The winding member (100) as claimed in any of claims 1 to 10, wherein the inner surface (a1) of the first clamp (212a) and the inner surface (b1) of the second clamp (212b) are flat planes parallel to each other and are inclined with respect to a center line in the longitudinal direction (x).

12. The winding member (100) as claimed in claim 11, wherein, when the first clamp (212a) and the second clamp (212b) are cut perpendicular to the longitudinal direction (x), outer surfaces (a2, b2) thereof are shaped of a circle divided by the insertion groove (113).

13. The winding member (100) as claimed in claim 12, wherein:
the inner and outer surfaces (a1, a2) of the first clamp (212a) are connected in a rounded manner,
a radius of curvature of a left round part (Ra1) of the first clamp (212a) is greater than a radius of curvature of a right round (Ra2) part of the first clamp (212a),
the inner and outer surfaces (b1, b2) of the second clamp (212b) are connected in a round manner, and
a radius of curvature of a left round part (Rb1) of the second clamp (212b) is smaller than a radius of curvature of a right round part (Rb2) of the second clamp (212b).

14. A secondary battery (20), comprising an electrode assembly (10) wound through a winding member (100), the winding member (100) including a winding core (110) for an electrode assembly (10), winding a positive electrode plate (AP), a negative electrode plate (CP), and a first separator (S1),
wherein:
the winding core (110) includes:
a pair of clamps (112, 212) extending along a longitudinal direction (x) of the winding core (110), and
a base portion (111) coupled to a first end and a second end of each clamp (112, 212) of the pair of clamps (112, 212);
the pair of clamps (112, 212) are spaced apart from each other vertically around an insertion groove (113), the pair of clamps (112, 212) including a first clamp (212a) and a second clamp (212b) extending along the longitudinal direction (x);
the first clamp (212a) include a pair of protrusions (ax, ay) protruding in the direction of the second clamp (212b) on an inner surface (a1) of the first clamp (212a); and
at least one protrusion of the pair of protrusions (ax, ay) fixes a winding-front end of the first separator (S1) inserted into the insertion groove (113) to an inner surface (b1) of the second clamp (212b).

15. A winding member (100), comprising a winding core (110) for an electrode assembly (10), the winding core (110) being configured to wind a positive electrode plate (AP) and a negative electrode plate (CP),
wherein:
the winding core (110) includes:
a pair of clamps (112, 212) extending along a longitudinal direction (x) of the winding core (110), and
a base portion (111) coupled to a first end and a second end of each of the clamps (112, 212);
the pair of clamps (112, 212) are spaced apart from each other vertically around an insertion groove (113), the pair of clamps (112, 212) including a first clamp (212a) and a second clamp (212b) extending along the longitudinal direction (x);
the first clamp (212a) includes a pair of protrusions (ax, ay) protruding in the direction of the second clamp (212b) on an inner surface (a1) of the first clamp (212a); and
at least one protrusion of the pair of protrusions (ax, ay) fixes a winding-front end to an inner surface (b1) of the second clamp (212b).
